(19) Europäisches Patentamt
European Patent Office
Office européen des brevets

(11) EP 0 602 008 B1

(12) # FASCICULE DE BREVET EUROPEEN

(45) Date de publication et mention de la délivrance du brevet:
**07.04.1999 Bulletin 1999/14**

(51) Int Cl.6: **C08G 81/02**

(21) Numéro de dépôt: **94101793.1**

(22) Date de dépôt: **24.05.1988**

(54) **Agent permettant de rendre compatible au moins deux polymères thermoplastiques incompatibles et les alliages thermoplastiques obtenus**

Kompatibilisierungsmittel für wenigstens zwei unversträgliche thermoplastische Polymere und so erhaltene thermoplastische Legierungen

Agent to compatibilise at least two incompatible thermoplastic polymers and thermoplastic alloys obtained

(84) Etats contractants désignés:
**AT BE DE FR GB IT NL SE**

(30) Priorité: **04.06.1987 FR 8707800**

(43) Date de publication de la demande:
**15.06.1994 Bulletin 1994/24**

(62) Numéro(s) de document de la (des) demande(s) initiale(s) en application de l'article 76 CBE:
**88401258.4 / 0 295 982**

(73) Titulaire: **ELF ATOCHEM S.A.**
**92800 Puteaux, Hauts-de-Seine (FR)**

(72) Inventeurs:
- **Parsy, Roland**
  **F-92500 Ruel Malmaison (FR)**
- **Rivas, Nadine**
  **F-27670 Saint-Ouen du Tilleul (FR)**

(56) Documents cités:
**US-A- 3 906 057** **US-A- 4 319 003**

- **CHEMICAL ABSTRACTS, vol. 104, no. 26, 30 Juin 1986 Columbus, Ohio, US; abstract no. 225316, PIETRASANTA ET AL. 'Synthesis of ABA block co-oligomers of poly(methyl methycrylate) and poly(dimethylsiloxane)'**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 602 008 B1

Printed by Jouve, 75001 PARIS (FR)

## Description

La présente invention concerne un agent permettant de rendre compatible au moins deux polymères thermoplastiques incompatibles. Il s'agit de copolymères di ou triséquencés constitués d'au moins un télomère de N-vinylpyrrolidone ou de (méth)acrylate de méthyle et d'un oligomère mono ou difonctionnel d'un monomère polycondensable, le cas échéant d'un lactame.

L'invention concerne également le procédé de fabrication de cet agent de compatibilité. Il est obtenu par condensation de préférence à l'état fondu de télomère monofonctionnel de N-vinylpyrrolidone ou d'acrylate de méthyle ou encore de méthacrylate de méthyle avec un oligomère mono ou difonctionnel de monomère polycondensable, le cas échéant de lactame.

L'invention concerne également l'application consistant à associer l'agent de compatibilité à au moins deux polymères thermoplastiques incompatibles mais dont au moins un est compatible avec le télomère et au moins un est compatible avec l'oligomère.

L'invention concerne enfin les différents alliages de polymères thermoplastiques rendus compatibles en mélange par association avec l'agent de compatibilité.

Il est connu de rendre compatibles, dans certains types de mélanges spécifiques, deux polymères incompatibles en leur associant un tiers polymère, éventuellement séquencé ou greffé, partiellement compatible avec l'un et l'autre des polymères.

L'inconvénient de cette technique est de ne pas révéler de produits permettant de rendre systématiquement compatibles deux polymères incompatibles. C'est ainsi par exemple, que l'on ne sait toujours pas rendre efficacement compatibles les couples : polyamides-polyfluorés, polyéther bloc amide-polychlorure de vinyle. Pour associer de tels couples, il a pu être envisagé de leur incorporer en mélange un tiers polymère en quantité telle qu'on ne puisse plus parler d'agent de compatibilité mais de véritable mélange tricomposant.

Pour l'homme du métier l'agent de compatibilité ne sert qu'à modifier les propriétés interfaciales dans deux phases constituées par les deux polymères à rendre compatibles sans constituer par lui-même une troisième phase. C'est pour cette raison que les agents de compatibilité efficaces ne sont utilisés qu'à de faibles doses dans les mélanges de polymères à rendre compatibles, généralement en quantité inférieure à 5 % en poids de mélange.

L'agent de compatibilité selon l'invention est susceptible d'être obtenu par le procédé selon la revendication 1. Il est caractérisé par la formule générale :

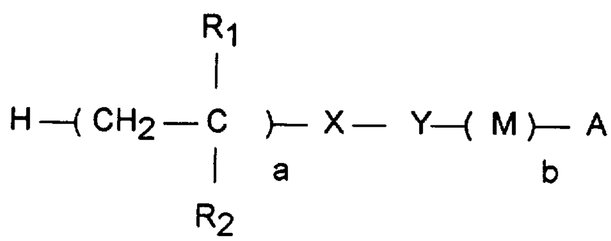

dans laquelle

$R_1$ est l'hydrogène ou le groupement méthyle
R2 est le groupement

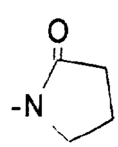

ou

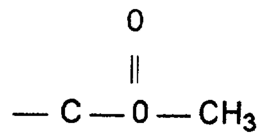

M est un motif monomérique issu d'un monomère polycondensable, le cas échéant d'un lactame
a et b sont des nombres identiques ou différents compris entre 2 et 1 000 et mieux entre 10 et 50
avec A qui est :

(1) soit

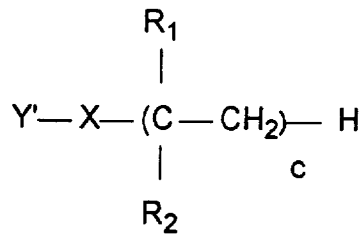

c étant un nombre compris entre 2 et 1 000 et mieux entre 10 et 50 et dans ce cas :
seul Y ou Y' existe et représente le reste fonctionnel d'un limitateur de chaîne difonctionnel.
-X- est choisi parmi les groupements : -R-O-,

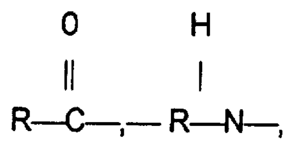

étant entendu que les groupements X et Y, ou X et Y', ou X et $(M)_b$ sont liés entre eux par une fonction ester ou amide, R étant le reste d'un agent de transfert monofonctionnel.

(2) soit le reste d'un limitateur de chaîne monofonctionnel dont le proton est exclu si la fonction active est une amine ou un alcool, ou dont le groupement hydroxyle est exclu si la fonction active est un acide carboxylique et dans ce cas :

Y n'existe pas.
-X- est choisi parmi -R-O-,

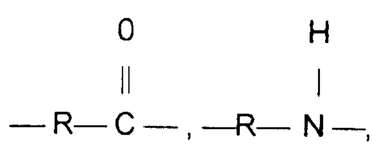

étant entendu que les groupements X et $(M)_b$ sont liés entre eux par une fonction ester ou amide, R étant le reste d'un agent monofonctionnel de transfert.

Comme il est possible de s'en rendre compte dans la formule générale précédente l'agent de compatibilité est un copolymère di ou triséquencé. Ces copolymères di ou triséquencés sont obtenus par condensation (A) d'un télomère monofonctionnel avec (B) un oligomère mono ou difonctionnel. Cette condensation s'effectue par formation d'une liaison ester ou amide entre le télomère et l'oligomère.

Le télomère monofonctionnel (A) entrant dans la fabrication de l'agent de compatibilité correspond à la formule générale :

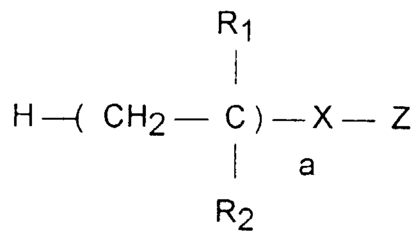

dans laquelle

$R_1$, $R_2$, a et X sont tels que définis précédemment
avec Z = hydrogène si -X- est -R-O- ou

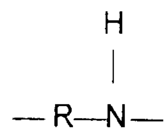

ou Z = OH si -X- est

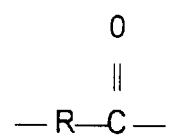

Ce télomère est obtenu par polymérisation, en présence ($A_2$) d'un agent de transfert monofonctionnel et ($A_1$) de N-vinylpyrrolidone ou de (méth)acrylate de méthyle. Cette polymérisation, effectuée de façon connue, consiste à amorcer thermiquement par un agent de polymérisation non fonctionnel dans le sens de la polycondensation, en milieu solvant non réactif sous agitation et atmosphère inerte, la croissance de chaines polymères qui se désactivent sur l'agent de transfert monofonctionnel. La température de réaction, dépendant de la cinétique de décomposition de l'agent de polymérisation, peut varier de 60 à 110° C.
Cette polymérisation conduisant à la fabrication du télomère peut également être amorcée par rayonnement UV dans la mesure où l'agent de polymérisation est remplacé par un photoamorceur non fonctionnel dans le sens de la polycondensation.
L'agent de polymérisation est habituellement choisi parmi les composés azo, peroxydiques ou leurs mélanges. Les plus usuels sont l'azobisisobutyronitrile et le peroxyde terbutylique.
L'agent de transfert monofonctionnel est de préférence choisi parmi les mercaptans monofonctionnels et plus particulièrement parmi le mercaptoéthanol, l'acide mercaptopropionique et l'acide thioglycolique.
Le degré de polymérisation du télomère est contrôlé par le rapport molaire initial du monomère à l'agent de transfert monofonctionnel. Ce degré de polymérisation est réglé par la loi connue :

$$Ln\left(1 - \frac{\alpha Mo}{To\left(\overline{DPn}\right)}\right) = C_T x \, Ln\left(1 - \alpha\right)$$

$\alpha$: taux de conversion du monomère ; l'évolution de ce taux peut être mesurée par chromatographie en phase gazeuse.
Mo et To sont respectivement les concentrations initiales en monomère et en agent de transfert monofonctionnel.
$\overline{DP}n$ représente le degré moyen de polymérisation du télomère.
$C_T$ est la constante de transfert à l'agent de transfert monofonctionnel. De nombreuses valeurs de constante de transfert sont regroupées dans "Polymer Handbook Second Edition p. III-92 Ed. J. BRANDRUP ; E.H. IMMEREUT". La valeur de cette constante peut être déterminée expérimentalement en appliquant l'équation précédente. C'est ainsi qu'a été définie la valeur de la constante de transfert de la N-vinylpyrrolidone à l'acide mercaptopropionique : cette constante est voisine de 1. Connaissant la valeur de $C_T$, l'opérateur peut se fixer des concentrations initiales Mo, To et arrêter la télomérisation à un taux de conversion $\alpha$ donné de façon à obtenir des télomères de $\overline{DP}$n désiré.

L'oligomère (B) monofonctionnel pouvant entrer dans la fabrication de l'agent de compatibilité correspond à la formule générale :

T-Y-$(M)_b$-A dans laquelle :
b est tel que défini précédemment avec :
M est un motif issu d'un monomère polycondensable ($B_1$), le cas échéant d'un lactame,
A et Y sont tels que définis précédemment en (2)
T = H si la fonction active de A est une amine ou un alcool
ou T = OH si la fonction active de A est un acide carboxylique.

L'oligomère (B) difonctionnel pouvant entrer dans la fabrication de l'agent de compatibilité correspond à la formule générale :

T-Y-$(M)_b$-Y'-T' dans laquelle
b est tel que défini précédemment
Y et Y' sont tels que définis précédemment en (1) avec :

(i) si le limitateur de chaine ($B_2$) est un diacide :
T = H ou OH et respectivement T' = OH ou H
(ii) si le limitateur de chaine ($B_2$) est un diol ou une diamine ou un aminoalcool :
T = T' = H

Les monomères polycondensables ($B_1$) dont sont issus les motifs M correspondent à la formule générale :

B-$R_5$-C dans laquelle
$R_5$ est soit (i) une chaine alkyle, linéaire ou ramifiée, contenant de 4 à 12 carbones soit (ii) un noyau aromatique de préférence à 6 carbones, soit encore une combinaison de deux motifs décrits en (i) et/ou en (ii), ces deux motifs étant réunis par une fonction ester ou amide.
B est $NH_2$, OH, COOQ avec Q = H, Cl ou une chaine alkyle,
linéaire ou ramifiée, contenant de 1 à 4 carbones
C est $NH_2$, OH, COOQ avec Q tel que défini en B.

Les monomères les plus usuels sont l'acide amino-11-undécanoïque, l'acide dodécanedioïque, le butanediol, l'acide téréphtalique, l'hexaméthylène diamine, l'acide adipique, l'éthanolamine. Certains de ces monomères sont homopolymérisables, par exemple : l'acide amino-11-undécanoïque. D'autres doivent être associés pour assurer la polycondensation, tel est le cas par exemple pour le butanediol, l'acide téréphtalique, l'acide adipique, l'hexaméthylène diamine. Dans ces conditions, il doit être entendu dans cette invention que, lorsqu'il est écrit que M est issu d'un monomère polycondensable, M est un motif monomérique issu soit d'un monomère polycondensable sur lui-même, soit d'au moins deux monomères non polycondensables individuellement sur eux-mêmes, mais polycondensables l'un à l'autre. A titre d'exemple : dans le cas de la polycondensation d'un diacide carboxylique sur une diamine, le motif monomérique M comprend le reste de la molécule de diacide et de la molécule de diamine après condensation l'une sur l'autre. Dans ces cas M représente le produit M' + M'', M' étant issu d'un monomère bifonctionnel non-homopolymérisable et M'' étant issu d'un second monomère bifonctionnel non-homopolymérisable mais polycondensable avec le précédent.

Les lactames dont peuvent être issus les motifs M sont de préférence le caprolactame encore appelé lactame 6 et le dodécalactame encore appelé lactame 12.

Les limitateurs de chaine monofonctionnels (B2.1) servent à limiter la croissance des chaines polymères, lors de la polymérisation de monomères polycondensables, le cas échéant de lactames, de façon à obtenir un oligomère monofonctionnel. Ils sont généralement introduits avec les monomères de départ avant de démarrer la polycondensation. Les quantités de limitateur introduites sont telles que le rapport molaire des monomères polycondensables, le cas échéant des lactames, sur sur le limitateur, soit compris entre 2 et 150 et mieux entre 10 et 50.

Les limitateurs de chaine monofonctionnels utilisés dans la polymérisation de monomères polycondensables,

le cas échéant de lactames, correspondent habituellement à la formule générale :

$R_6$-B dans laquelle
B est tel que défini précédemment
$R_6$ est soit une chaine hydrocarbonée, linéaire ou ramifiée, contenant de 2 à 20 atomes de carbone soit un noyau aromatique.

Parmi ces limitateurs monofonctionnels, on choisit de préférence l'acide laurique, la laurylamine, l'acide stéarique, l'alcool oléique.

Les limitateurs de chaine difonctionnels (B2.2) servent à limiter la croissance des chaines polymères, lors de la polymérisation de monomères polycondensables, le cas échéant de lactames, de façon à obtenir un oligomère difonctionnel. Ils sont généralement ajoutés aux monomères de départ avant la polycondensation. Les limitateurs de chaine difonctionnels utilisés dans la polymérisation de monomères polycondensables, le cas échéant de lactames, sont des composés qui contiennent deux fonctions jouant le même rôle dans la formation d'un groupe ester ou amide. Leur introduction dans le milieu réactionnel crée une sur-stoechiométrie d'un type de fonctions par rapport à l'autre type de fonctions réactives. Les quantités de limitateur introduites sont telles que le rapport molaire des monomères polycondensables, le cas échéant des lactames sur le limitateur soit compris entre 2 et 150 et mieux entre 10 et 50. Les deux fonctions du limitateur de chaine peuvent être : acides carboxyliques comme dans le cas par exemple de l'acide adipique ou téréphtalique ; amines comme dans le cas par exemple de l'hexaméthylènediamine ; alcool et amine dans le cas par exemple de l'éthanolamine.

L'agent monofonctionnel de transfert (A2) sert à réaliser, par polymérisation radicalaire, des télomères monofonctionnels de N-vinylpyrrolidone ou de (méth)acrylate de méthyle. Il est introduit en mélange avec la N-vinylpyrrolidone ou le (méth)acrylate de méthyle, avant polymérisation, en quantité telle que le rapport molaire du monomère sur l'agent monofonctionnel de transfert soit compris entre 2 et $10^3$, et mieux entre 10 et 50. Il est choisi parmi les composés de formule générale :

X-$R_9$-B dans laquelle :
X est une fonction thiol SH
B est tel que défini précédemment
$R_9$ est une chaine hydrocarbonée, linéaire ou ramifiée, comportant de 1 à 8 atomes de carbone pouvant contenir au moins un atome d'azote et/ou d'oxygène.

Parmi ces agents monofonctionnels de transfert on choisit de préférence l'acide mercaptopropionique, le mercaptoéthanol ou l'acide thioglycolique.

L'oligomère monofonctionnel pouvant entrer dans la fabrication de l'agent de compatibilité peut être fabriqué selon tout procédé connu. Toutefois, on préfère le préparer dans les conditions ci-après.

L'oligomère est obtenu par polycondensation d'un monomère, tel que défini précédemment, le cas échéant d'un lactame, en présence d'un limitateur monofonctionnel de polymérisation. Cette polycondensation s'effectue, de façon connue, sous agitation à des températures habituellement comprises entre 200 et 300° C, sous vide ou sous atmosphère inerte. Dans le cas d'une polycondensation avec formation de liaison ester, la cinétique de réaction peut être améliorée en ajoutant au milieu réactionnel un catalyseur d'estérification. La longueur de chaine de l'oligomère peut être déterminée par le rapport molaire initial entre le monomère polycondensable, le cas échéant le lactame et le limitateur monofonctionnel de polymérisation, sachant qu'il y a une molécule de limitateur par chaine d'oligomère.

L'oligomère difonctionnel pouvant entrer dans la fabrication de l'agent de compatibilité peut être fabriqué selon tout procédé connu. Toutefois, on préfère le préparer dans les conditions ci-après.

L'oligomère est obtenu selon la technique décrite précédemment en remplaçant le limitateur monofonctionnel de polymérisation par un limitateur difonctionnel de polymérisation.

Les copolymères di ou triséquencés, objets de l'invention, sont de préférence obtenus par condensation à l'état fondu de télomère monofonctionnel tel que défini précédemment avec un oligomère mono ou difonctionnel de monomère polycondensable, le cas échéant de lactame.

Cette polycondensation relie, de façon covalente, le télomère et l'oligomère par des fonctions ester ou amide. Elle s'effectue à une température à laquelle le télomère et l'oligomère se trouvent à l'état fondu ou tout au moins malléable. Cette température est généralement comprise entre 200 et 300° C. La polycondensation s'effectue également de préférence sous vide ou sous balayage de gaz inerte afin d'éliminer les produits volatils formés. Les quantités initiales de télomère et d'oligomère sont ajustées de façon à avoir des quantités sensiblement stoechiométriques de fonctions assurant la condensation. Si la condensation conduit à la formation de fonctions ester, la cinétique de réaction peut être accélérée par incorporation au mélange d'une faible quantité de catalyseur d'estérification. La qualité de séquençage s'évalue par dosage du taux de fonctions résiduelles dans les copolymères bi ou triséquencés obtenus

représentant l'agent de compatibilité.

L'agent de compatibilité permet de combiner de façon homogène au moins deux polymères thermoplastiques incompatibles mais dont l'un est compatible avec le télomère constitutif de l'agent de compatibilité et l'autre est compatible avec l'oligomère constitutif de cet agent de compatibilité. L'agent de compatibilité est incorporé de façon habituelle au mélange de résines thermoplastiques, à l'état fondu, dans un appareil de malaxage. La quantité d'agent de compatibilité introduite est faible, de l'ordre de 0,1 à 5 % et mieux de 0,5 à 1 % en poids par rapport au poids de mélange de résines thermoplastiques. Cette faible quantité d'agent au mélange évite au maximum l'influence d'un tiers copolymère dans les propriétés physiques et chimiques du mélange de résines thermoplastiques devenues compatibles.

La compatibilité engendrée par l'agent selon l'invention est mise en évidence par microscopie électronique et par les propriétés mécaniques du produit résultant du mélange des polymères thermoplastiques incompatibles.

La morphologie d'un mélange de polymères thermoplastiques sans agent de compatibilité, examinée en microscopie électronique, se présente sous forme de gros nodules d'un polymère inclus dans la matrice constituée par l'autre polymère. L'adhésion entre les nodules et la matrice est inexistante. L'addition de l'agent de compatibilité provoque une diminution significative de la taille des nodules qui deviennent dans certains cas inobservables. On observe également une forte adhésion entre les phases visibles par un recouvrement des nodules par la matrice. Il se forme dans ces conditions ce qu'on peut appeler un alliage, par assimilation aux structures métallurgiques, se différenciant des mélanges.

Les propriétés mécaniques de tels alliages thermoplastiques sont sensiblement voisines, sinon supérieures, de celles des constituants, pondérés par la fraction volumique de chaque constituant, conséquence de la loi d'additivité.

Les mélanges correspondants de résines thermoplastiques incompatibles sans agent de compatibilité possèdent au contraire des propriétés mécaniques généralement proches de celles du constituant le moins performant.

A titre d'exemple, les polymères thermoplastiques compatibles avec les télomères entrant dans la composition de l'agent de compatibilité peuvent être : des polymères fluorés, tels le polyfluorure de vinylidène et le polyfluorure de vinyle ; des polymères chlorés tels que le polyfluorure de vinyle et le polychlorure de vinylidène.

Dans la dénomination polymères on entend également les copolymères dans la mesure où la teneur en motifs compatibles du copolymère est suffisante pour conserver la compatibilité.

Les polymères thermoplastiques compatibles avec les oligomères entrant dans la composition de l'agent de compatibilité dépendent évidemment de la nature de l'oligomère.

A titre d'exemple on peut citer comme compatibles avec les oligomères mono et difonctionnels d'acide amino-11 undécanoïque : les polyamides, en particulier 11 et 12, et les copolymères blocs dérivés de ces polyamides comme par exemple les polyétherblocamides.

Grâce à l'agent de compatibilité objet de l'invention, il est possible de réaliser de nouveaux alliages de résines thermoplastiques tels que à titre d'exemples : polyamide-polyfluorurée, polyétherblocamide-polychlorure de vinyle, polyétherblocamide-polyfluoré.

Sont particulièrement considérés comme nouveaux en eux-mêmes les alliages :

- Polyamide-polyfluoré et plus particulièrement polyamide 11 ou 12-polyfluorure de vinylidène
- Polyétherblocamide-polyfluoré et plus particulièrement polyétherblocamide-polyfluorure de vinylidène
- Polyétherblocamide-polychlorure de vinyle

Les exemples suivants illustrent l'invention sans toutefois la limiter.

***EXEMPLE 1***

*A - Détermination de la constante de transfert* $C_T$ *de la N-vinylpyrrolidone*

Dans un ballon de 100 $cm^3$, on introduit 10 g de N-vinylpyrrolidone, 0,74 g d'acide β-mercaptopropionique, 0,4 g d'azobisisobutyronitrile, 47,4 g d'éthanol. Ce mélange est chauffée à 60° C, sous agitation et balayage d'azote.

La réaction est arrêtée au temps désiré en plongeant le ballon dans de la glace. Un prélèvement du mélange est alors injecté en chromatographie phase vapeur afin de déterminer le taux de monomère résiduel par étalonnage interne à l'orthodichlorobenzène. Le reste du mélange est précipité dans de l'éther éthylique à froid, filtré et séché : le télomère ainsi obtenu est analysé en osmométrie et par dosage des fonctions acides.

Le tableau suivant donne les caractéristiques des télomères :

$\overline{Mn}$ COOH et $\overline{DPn}$ COOH sont la masse moléculaire moyenne et le degré de polymérisation moyen du télomère déterminés par la mesure des fonctions carboxyliques terminales : $\overline{Mn}$ OSMO et $\overline{DPn}$ OSMO sont les mêmes grandeurs estimées par osmométrie (osmomètre à tension de vapeur KNAUER).

| **Temps de réaction (minutes)** | **Taux de conversion** $\alpha$ | $\overline{Mn}$ COOH | $\overline{DPn}$ COOH | $\overline{Mn}$ OSMO | $\overline{DPn}$ OSMO |
|---|---|---|---|---|---|
| 15 | 0,28 | 1178 | 9,66 | 1119 | 9,13 |
| 38 | 0,38 | 1276 | 10,54 | 1248 | 10,29 |
| 60 | 0,43 | 1387 | 11,54 | 1286 | 10,63 |
| 120 | 0,64 | 1486 | 12,44 | 1420 | 11,84 |

Ces données permettent le calcul de la constante de transfert $C_T$ par le tracé de la fonction

$$\text{Log}\left(1-\frac{\alpha Mo}{To\ x(\overline{DPn})}\right)=\int \text{Log}\,(1-\alpha)$$

Cette constante vaut 0,91 si ($\overline{DP}$n) est évalué par le dosage des fonctions terminales et 1,01 si ($\overline{DP}$n) est déterminé par osmétrie : le système (N-vinylpyrrolidone-acide β-mercaptopropionique) est proche de l'idéal ($C_T$ = 1), ce qui simplifie les calculs prévisionnels.

*B - Préparation du télomère de N-vinylpyrrolidone*

Dans un ballon de 2 000 $cm^3$, on introduit 230 g de N-vinylpyrrolidone, 11,7 g d'acide β-mercaptopropionique, 9,2 g d'azobisisobutyronitrile, 600 $cm^3$ d'éthanol. Ce mélange est chauffé à 60° C pendant 6 heures, sous agitation et balayage d'azote. Le télomère monocarboxylique est précipité par l'éther éthylique à froid, filtré et séché. On en récupère 220,8 g de masse moléculaire moyenne de 2177 déterminée par dosage des fonctions carboxyliques terminales.

*C-Préparation de l'oligomère α, ω diamine d'acide amino-11 undécanoïque*

Dans un autoclave de 500 $cm^3$, on introduit 200 g d'acide amino-11 undécanoïque et 10,2 g d'hexaméthylènediamine. On chauffe le réacteur en position fermé, pendant 2 heures à 240° C, après l'avoir purgé à l'azote. On poursuit le chauffage pendant deux heures en établissant un vide progressif de 130 Pa dans le réacteur. On obtient ainsi un oligomère diamine dont la masse est de 2000, déterminée par dosage des fonctions terminales.

*D - Préparation du copolymère triséquencé*

Dans un réacteur Dumas de 1 litre, on introduit 210 g du télomère monocarboxylique de N-vinylpyrrolidone de $\overline{Mn}$ COOH égal à 2177, synthétisé comme décrit précédemment, et 96,5 g d'oligomère α, ω diamine d'acide amino-11 undécanoïque, de masse 2000, décrit ci-dessus. L'ensemble est porté à 240° C, sous agitation et sous vide d'environ 130 Pa, pendant 3 heures. Après refroidissement, on obtient un copolymère triséquencé poly N-vinylpyrrolidone -Polyamide 11 - poly N-vinylpyrrolidone dont la viscosité inhérente dans le métacrésol est de 0,66 et dont les indices d'acide et d'amine sont respectivement de 0,031 meq/g et de 0,037 meq/g.

***EXEMPLE 2***

*A - Préparation des télomères*

Dans le tableau suivant, sont réunies les conditions de synthèse de cinq télomères différents dont les masses moyennes en nombre ont été déterminées par dosage des fonctions terminales ($\overline{Mn}$ COOH).

Pour chaque synthèse, on introduit dans un ballon de taille indiquée, les quantités indiquées de N-vinylpyrrolidone, d'acide mercaptopropionique, d'éthanol et d'azobisobutyronitrile. Le mélange est chauffé à 60° C pendant 6 heures, sous agitation et balayage d'azote, on précipite dans de l'éther éthylique à froid. Le précipité est filtré, séché, puis pesé.

| No. du Télomère | Contenance du ballon ($cm^3$) | Ethanol ($cm^3$) | N-vinyl pyrrolidone (g) | Acide mercapto propionique (g) | Azobis isobutyronitrile (g) | Poids du précipité (g) | $\overline{Mn}_{COOH}$ |
|---|---|---|---|---|---|---|---|
| T-1 | 250 | 150 | 25 | 1,85 | 1 | 14 | 2240 |
| T-2 | 1000 | 600 | 97,3 | 2,7 | 3,9 | 81,7 | 4551 |
| T-3 | 250 | 150 | 25 | 1,85 | 1 | 23,5 | 1752 |
| T-4 | 1000 | 600 | 230 | 17,0 | 9,2 | 220 | 1875 |
| T-5 | 1000 | 600 | 230 | 17,0 | 9,2 | 240 | 1840 |

*B - Préparation des oligomères*

B.1 Préparation d'oligomères monoaminé d'acide amino-11 undécanoïque.

Dans le tableau suivant, sont réunies les conditions de synthèse de deux oligomères monofonctionnels dont les masses moyennes en nombre ont été déterminées par dosage des fonctions amines terminales

$$\left(\overline{Mn}NH_2\right).$$

Pour chaque synthèse, on introduit dans un tube de 200 $cm^3$, 20 g d'acide amino-11 undécanoïque et la quantité indiquée de laurylamine. Le mélange est porté à 240° C, sous balayage d'azote et agitation, pendant 3 heures : la polycondensation est donc menée en masse.

| Numéro de l'oligomère | Laurylamine (g) | $\overline{Mn}$ NH2 |
|---|---|---|
| 0-1 | 1,3 | 2190 |
| 0-2 | 0,7 | 4328 |

B.2 Préparation d'oligomères α, ω diamine d'acide amino-11 undécanoïque

Dans le tableau suivant sont réunies les conditions de synthèse de trois oligomères difonctionnels dont les masses moyennes en nombre ont été déterminées par dosage des fonctions terminales.

Pour chaque synthèse, on introduit dans un tube de 200 $cm^3$, 20 g d'acide amino-11 undécanoïque et la quantité indiquée d'hexaméthylènediamine. Le mélange est porté à 240° C pendant 1 heure en gardant le tube en position fermée après l'avoir purgé à l'azote, puis pendant 2 heures sous balayage d'azote.

| Numéro de l'oligomère | Hexaméthylène diamine (g) | $\overline{Mn}$ NH2 |
|---|---|---|
| 0-3 | 1 | 2000 |
| 0-4 | 0,5 | 4066 |
| 0-5 | 1,15 | 1535 |

*C - Préparation des copolymères*

On prépare des copolymères biséquencés en condensant un télomère monocarboxylique choisi parmi T-1 à T-5 avec un oligomère monoaminé chois entre 0-1 et 0-2.

On prépare des copolymères triséquencés en condensant un télomère monocarboxylique choisi parmi T-1 à T-5 avec un oligomère α,ω-diaminé choisi parmi 0-3 à 0-5.

Cette condensation se fait dans un tube de 200 $cm^3$ dans lequel on introduit 10 grammes d'oligomère fonctionnel choisi parmi 0-1 à 0-5 est une quantité de télomère choisi parmi T-1 à T-5 telle que l'on ait une stoechiométrie égale à 1 entre les fonctions amines et carboxyliques terminales. Dans le tableau suivant sont regroupées les synthèses effectuées. Les mélanges sont portés à 240° C, pendant 3 heures, sous agitation et sous vide d'environ 130 Pa.

| No du copolymère séquencé | Nature du copolymère séquencé | No du télomère | No de l'oligomère | Masse de télomère condensée avec 10g d'oligomère (g) |
|---|---|---|---|---|
| S-1 | Diséquencé | T-1 | 0-1 | 10,2 |
| S-2 | Diséquencé | T-2 | 0-2 | 10,5 |
| S-3 | Triséquencé | T-3 | 0-5 | 22,6 |
| S-4 | Triséquencé | T-5 | 0-3 | 18,4 |
| S-5 | Triséquencé | T-4 | 0-4 | 9,2 |

***EXEMPLE 3***

Dans un ballon de 250 $cm^3$, on introduit 33,3 g de méthacrylate de méthyle, 1,85 g d'acide β-mercaptopropionique, 1g d'azobisisobutyronitrile et 50 $cm^3$ d'éthanol. Le mélange est chauffé à 60° C pendant 5 heures 30 minutes.
On observe la précipitation du télomère dans l'éthanol ; ce télomère est séparé par filtration, lavé à l'éther et séché. On obtient 30 g d'un télomère dont la masse moléculaire moyenne est de 7059, déterminée par dosage des fonctions carboxyliques terminales.
On condense 10 g de ce télomère avec 4,6 g de l'oligomère $\alpha,\omega$ diaminé d'acide amino-11 undécanoïque de masse 1535 dont la préparation a été décrite dans l'exemple 2-B.2, sous le numéro 0-5.
La condensation est menée dans un tube de 200 $cm^3$, sous agitation et sous un vide d'environ 130 Pa, pendant 4 heures à 240°C. On obtient, après condensation, un copolymère triséquencé polyméthacrylate de méthyle-polyamide 11-polyméthacrylate de méthyle.

***EXEMPLE 4***

Un mélange en poids comportant 49,5 parties de polyamide-12 (grade AESNO de la Société ATOCHEM), 49,5 parties de polyfluorure de vinylidène (FORAFLON 1000LD de la Société ATOCHEM) et une partie du copolymère triséquencé décrit dans l'exemple 1 est porté à 200° C et malaxé dans la cuve d'un plastographe BRABENDER pendant 15 minutes (ECHANTILLON 1). Un mélange témoin est effectué dans les mêmes conditions sans incorporer de copolymère triséquencé (ECHANTILLON 2).
L'examen par microscopie électronique de fractures cryogéniques de ces échantillons montre la compatibilisation qu'induit la présence du copolymère triséquencé.
La taille des nodules de polyfluorure de vinylidéne dispersés dans la matrice de polyamide - 12 est de 5 à 6 µm pour l'échantillon 2 et de 0,6 à 0,9 µm pour l'échantillon 1 ; de plus, la densité de population de ces nodules est bien moindre pour l'échantillon 1.
Cette compatibilité est confirmée par la mesure de l'allongement à la rupture qui est de 14 % pour l'échantillon 2 et de 183 % pour l'échantillon 1.
Différents mélanges contenant 49,5 parties de polyamide-12, 49,5 parties de polyfluorure de vinylidène et une partie de l'un des copolymères séquencés décrits dans les exemples 2 et 3 sont portés à 200°C et malaxés dans la cuve d'un plastographe BRABENDER pendant 15 minutes.
Les examens en microscopie électronique indiquent la même évolution de la morphologie des mélanges que celle observée entre les échantillons 1 et 2. La taille des nodules de polyfluorure de vinylidène est inférieure à celle observée pour le mélange témoin (ECHANTILLON 2). Ces nodules sont inférieurs à 1,5 µm si le copolymère séquencé incorporé dans le mélange est S-3, S-4 ou S-5. Ils sont inférieurs à 3 microns si le copolymère séquencé est S-1 ou S-2, ou celui décrit dans l'exemple 3.

***EXEMPLE 5***

Un mélange en poids composé de 49,5 parties de polychlorure de vinyle (grade RB 8010 de la société ATOCHEM, stabilisé par de l'IRGASTAB 17 MOK), 49,5 parties d'un polyétherblocamide (PEBAX 3533 de la société ATOCHEM) et 1 partie de copolymère triséquencé décrit dans l'exemple 1-D est mis en oeuvre dans les conditions décrites dans l'exemple 4 (ECHANTILLON 3).
Un mélange témoin est réalisé dans les mêmes conditions sans incorporer de copolymère triséquencé (ECHANTILLON 4).
L'examen en microscopie électronique montre que la compatibilité introduite par le copolymère triséquencé conduit à une diminution de la taille et de la densité de population des nodules de polychlorure de vinyle dans la matrice

de polyétherblocamide. La taille des nodules est de 3 à 4 µm pour l'échantillon 4 et est inférieure à 0,6 µm pour l'échantillon 3.

***EXEMPLE 6***

Un mélange en poids de 49,5 parties de polyétherblocamide (PEBAX 5533 de la société ATOCHEM), de 49,5 parties de polyfluorure de vinylidène (FORAFLON 6000 HD de la société ATOCHEM) et de 1 partie du copolymère triséquencé décrit dans l'exemple 1-D est malaxé dans la cuve d'un plastographe BRABENDER, pendant 15 minutes à 200°C (ECHANTILLON 9).

Un mélange témoin est effectué dans les mêmes conditions sans incorporer de copolymère triséquencé (ECHANTILLON 10).

L'examen par microscopie électronique des fractures cryogéniques de ces échantillons montre que la taille moyenne des nodules de polyfluorure de vinylidène dispersés dans la matrice de polyétherblocamide est de 8,6 µm pour l'échantillon 10 et de 5,1 µm pour l'échantillon 9.

D'autre part, le recouvrement des nodules par la matrice est plus important pour l'échantillon 9 que pour l'échantillon 10, ce qui témoigne de l'amélioration de l'adhésion entre les phases.

## Revendications

**1.** Procédé de fabrication d'un agent de compatibilité caractérisé en ce qu'il est obtenu par condensation de :

**(A)** un télomère monofonctionnel de N-vinylpyrrolidone ou de (méth)acrylate de méthyle produit par polymérisation radicalaire d'un mélange

**(A1)** de N-vinylpyrrolidone ou de (méth)acrylate de méthyle avec

**(A2)** un agent monofonctionnel de transfert choisi parmi les composés de formule générale :

$X\text{-}R_9\text{-}B$ dans laquelle :

X est une fonction thiol SH

B est $NH_2$, OH, COOQ avec Q = H, Cl ou une chaîne alkyl, linéaire ou ramifiée, contenant de 1 à 4 carbones,

$R_9$ est une chaîne hydrocarbonée, linéaire ou ramifiée, comportant de 1 à 8 atomes de carbone pouvant contenir au moins un atome d'azote et/ou d'oxygène, avec

**(B)** l'oligomère mono ou difonctionnel d'un monomère polycondensable étant produit par polycondensation,

**(B1)** d'un monomère polycondensable choisi parmi les produits de formule :

$B\text{-}R_5\text{-}C$ dans laquelle :

$R_5$ est soit une chaîne alkyle, linéaire ou ramifiée, contenant de 4 à 12 atomes de carbone, soit un noyau aromatique,

B est : $NH_2$, OH, COOQ avec Q = H, Cl ou une chaîne alkyle linéaire ou ramifiée, contenant de 1 à 4 carbones,

C est : $NN_2$,OH, COOQ avec Q = H, Cl ou une chaîne alkyle linéaire ou ramifiée, contenant de 1 à 4 carbones, en présence :

**(B2)** d'un limitateur de chaîne choisi parmi

**(B2.1)** les limitateurs de chaine monofonctionnels de formule générale :

$R_6\text{-}B$ dans laquelle :

B est tel que défini précédemment,

$R_6$ est soit une chaîne hydrocarbonée, linéaire ou ramifiée, contenant de 2 à 20 atomes de carbone soit un noyau aromatique, et

**(B2.2)** les limitateurs de chaîne difonctionnels qui sont des composés qui contiennent deux fonctions jouant le même rôle dans la formation d'un groupe ester ou amide.

**2.** Procédé selon la revendication 1 caractérisé en ce que la condensation s'effectue par mélange du télomère et de l'oligomère, rendus malléables par la chaleur, en quantités sensiblement stoechiométriques des fonctions assurant la condensation.

**3.** Produit susceptible d'être obtenu par le procédé selon la revendication 1.

**4.** Alliage d'au moins deux polymères thermoplastiques incompatibles par ajout d'au plus 5 % en poids par rapport au poids du mélange des polymères thermoplastiques d'un composé de la revendication 3 dont le télomère constitutif est compatible avec l'un au moins des polymères thermoplastiques et dont l'oligomère constitutif est compatible avec au moins un autre des polymères thermoplastiques de l'alliage.

**5.** Alliage selon la revendication 4 caractérisé en ce qu'il est essentiellement constitué de l'association du couple de résine thermoplastique : polyétherblocamide-polychlorure de vinyle, polyétherblocamide-polyfluorée.

**6.** Alliage selon la revendication 5 choisi dans le couple :

- Polyamide-11 ou 12 - polyfluorure de vinylidène
- Polyétherblocamide-polyfluorure de vinylidène
- Polyétherblocamide-polychlorure de vinyle

**7.** Alliage selon l'une des revendications 4 à 6 caractérisé en ce qu'il contient de 0,1 à 0,5 % en poids de l'agent de compatibilité de la revendication 3.

## Patentansprüche

**1.** Verfahren zur Herstellung eines Kompatibilisierungsmittels, dadurch gekennzeichnet, daß es erhalten wird durch Kondensation

(A) eines monofunktionellen Telomers von N-Vinylpyrrolidon oder Methyl(meth)acrylat, das hergestellt wird durch radikalische Polymerisation eines Gemischs aus

(A1) N-Vinylpyrrolidon oder Methyl(meth)acrylat und
(A2) einem monofunktionellen Übertragungsmittel, das unter den Verbindungen der allgemeinen Formel $X - R_9 - B$ ausgewählt wird, in der bedeutet:

- X eine Thiolgruppe -SH,
- B eine Gruppe $-NH_2$, -OH, -COOQ, worin -Q Wasserstoff, Chlor oder geradkettiges oder verzweigtes $C_{1-4}$-Alkyl darstellt,
- $R_9$ eine geradkettige oder verzweigte Kohlenwasserstoffkette mit 1 bis 8 Kohlenstoffatomen, die mindestens ein Stickstoffatom und/oder Sauerstoffatom enthalten kann,

mit
(B) einem mono- oder difunktionellen Oligomer eines polykondensierbaren Monomers, das hergestellt wird durch Polykondensation

(B1) eines polykondensierbaren Monomers, das unter den Verbindungen der Formel
$B - R_5 - C$ ausgewählt wird, in der bedeutet:

- $R_5$ geradkettiges oder verzweigtes Alkyl mit 4 bis 12 Kohlenstoffatomen oder einen aromatischen Ring,
- B eine Gruppe $-NH_2$, -OH, -COOQ, worin -Q Wasserstoff, Chlor oder geradkettiges oder verzweigtes $C_{1-4}$-Alkyl darstellt,
- C eine Gruppe $-NH_2$, -OH, -COOQ, worin -Q Wasserstoff, Chlor oder geradkettiges oder verzweigtes $C_{1-4}$-Alkyl darstellt,

in Gegenwart

(B2) eines monofunktionellen Kettenbegrenzungsmittels, das ausgewählt wird unter

(B2.1) monofunktionellen Kettenbegrenzungsmitteln der allgemeinen Formel $R_6$ - B, in der bedeutet:

- B eine Gruppe, die wie weiter oben definiert ist,
- $R_6$ eine geradkettige oder verzweigte Kohlenwasserstoffkette mit 2 bis 20 Kohlenstoffatomen oder einen aromatischen Ring,

und
(B2.2) difunktionellen Kettenbegrenzungsmitteln, bei denen es sich um Verbindungen handelt, die zwei funktionelle Gruppen enthalten, die die gleiche Rolle bei der Bildung einer Ester- oder Amidgruppe spielen.

**2.** Verfahren nach Anspruch 1, dadurch gekennzeichnet, daß die Kondensation durch Vermischen des Telomers und des Oligomers, die durch Erwärmen geschmolzen sind, und mit Mengen des Telomers und des Oligomers durchgeführt wird, die in bezug auf die die Kondensation bewirkenden funktionellen Gruppen im wesentlichen den stöchiometrischen Mengen entsprechen.

**3.** Produkt, das durch das Verfahren gemäß Anspruch 1 erhalten werden kann.

**4.** Polymerlegierung aus mindestens zwei inkompatiblen thermoplastischen Polymeren, die einem Zusatz von höchstens 5 Gew.-%, bezogen auf das Gewicht des Gemischs der thermoplastischen Polymere, einer Verbindung gemäß Anspruch 3 enthält, deren als Grundbestandteil enthaltenes Telomer mit mindestens einem der thermoplastischen Polymere kompatibel ist und dessen als Grundbestandteil enthaltenes Oligomer mit mindestens einem der anderen, die Legierung bildenden thermoplastischen Polymere kompatibel ist.

**5.** Polymerlegierung nach Anspruch 4, dadurch gekennzeichnet, daß sie im wesentlichen aus einem der folgenden Paare thermoplastischer Harze besteht: Polyetherblockamid-Polyvinylchlorid, Polyetherblockamid-polyfluoriertes Harz.

**6.** Polymerlegierung nach Anspruch 5, die unter den folgenden Paaren

- Polyamid-11-Polyvinylidenfluorid oder Polyamid-12-Polyvinylidenfluorid
- Polyetherblockamid-Polyvinylidenfluorid
- Polyetherblockamid-Polyvinylchlorid

ausgewählt ist.

**7.** Legierung nach einem der Ansprüche 4 bis 6, dadurch gekennzeichnet, daß sie 0,1 bis 0,5 Gew.-% des Kompatibilisierungsmittels gemäß Anspruch 3 enthält.

## Claims

**1.** Process for the manufacture of a compatibility agent, characterized in that it is obtained by condensation of:

**(A)** a monofunctional telomer of N-vinylpyrrolidone or of methyl (meth)acrylate produced by radical polymerization of a mixture

**(A1)** of N-vinylpyrrolidone or of methyl (meth)acrylate with
**(A2)** a monofunctional transfer agent chosen from the compounds of general formula:
X-$R_9$-B, in which:

X is an SH thiol functional group
B is $NH_2$, OH or COOQ, with Q = H, Cl or a linear or branched alkyl chain comprising from 1 to 4 carbons,
$R_9$ is a linear or branched hydrocarbon-comprising chain comprising from 1 to 8 carbon atoms which can comprise at least one nitrogen and/or oxygen atom,

with
**(B)** the mono- or difunctional oligomer of a polycondensable monomer produced by polycondensation,

**(B1)** of a polycondensable monomer chosen from the products of formula:
$B-R_5-C$, in which:

$R_5$ is either a linear or branched alkyl chain comprising from 4 to 12 carbon atoms or an aromatic nucleus,
B is: $NH_2$, OH or COOQ, with Q = H, Cl or a linear or branched alkyl chain comprising from 1 to 4 carbons,
C is: $NH_2$, OH or COOQ, with Q = H, Cl or a linear or branched alkyl chain comprising from 1 to 4 carbons, in the presence:

**(B2)** of a chain-limiting agent chosen from

**(B2.1)** monofunctional chain-limiting agents of general formula:
$R_6-B$, in which:

B is as defined above,
$R_6$ is either a linear or branched hydrocarbon-comprising chain comprising from 2 to 20 carbon atoms or an aromatic nucleus, and

**(B2.2)** difunctional chain-limiting agents which are compounds which comprise two functional groups playing the same role in the formation of an ester or amide group.

**2.** Process according to Claim 1, characterized in that the condensation is carried out by mixing the telomer and oligomer, rendered malleable by heating, in essentially stoichiometric amounts of the functional groups providing the condensation.

**3.** Product which can be obtained by the process according to Claim 1.

**4.** Blend of at least two incompatible thermoplastic polymers by addition of at most 5% by weight with respect to the weight of the mixture of the thermoplastic polymers of a compound of Claim 3, the constituent telomer of which is compatible with at least one of the thermoplastic polymers and the constituent oligomer of which is compatible with at least one other of the thermoplastic polymers of the blend.

**5.** Blend according to Claim 4, characterized in that it is essentially composed of the combination of the thermoplastic resin pair: polyetherblockamide-poly(vinyl chloride), polyetherblockamide-polyfluoro.

**6.** Blend according to Claim 5, chosen from the pair:

- polyamide-11 or polyamide-12-poly(vinylidene fluoride)
- polyetherblockamide-poly(vinylidene fluoride)
- polyetherblockamide-poly(vinyl chloride).

**7.** Blend according to one of Claims 4 to 6, characterized in that it comprises from 0.1 to 0.5% by weight of the compatibility agent of Claim 3.